# EUROPÄISCHE PATENTSCHRIFT

(11) **EP 3 821 741 B1**
(45) Veröffentlichungstag und Bekanntmachung des Hinweises auf die Patenterteilung: **06.04.2022**
(21) Anmeldenummer: 20205427.6
(22) Anmeldetag: 03.11.2020
(51) Int. Cl.: A42B 3/04, A42B 3/06, B62J 1/16

(54) **KINDER-FAHRRADHELM**
CHILD'S BICYCLE HELMET
CASQUE DE BICYCLETTE POUR ENFANT

(30) Priorität: 15.11.2019 DE 102019217641
(43) Veröffentlichungstag der Anmeldung: 19.05.2021
(73) Patentinhaber: UVEX SPORTS GmbH & Co. KG, 90766 Fürth (DE)
(72) Erfinder: Greim, Wilma, 95233 Helmbrechts (DE); Proksch, Frank, 86167 Augsburg (DE)
(74) Vertreter: Rau, Schneck & Hübner Patentanwälte Rechtsanwälte PartGmbB

(56) Entgegenhaltungen:
- EP-A2- 1 674 384
- DE-U1-202010 012 408
- US-A- 5 940 890
- US-B1- 6 314 586

## Beschreibung

Die Erfindung betrifft einen Kinder-Fahrradhelm. Ferner richtet sich die Erfindung auf eine Zusatzanordnung für einen Kinder-Fahrradhelm. Die Erfindung ist auch auf eine Anordnung mit einem derartigen Kinder-Fahrradhelm gerichtet.

Wenn ein Fahrradfahrer mit einem Kind auf einem Fahrrad unterwegs ist, sitzt häufig das Kind in einem an diesem Fahrrad angeordneten Kinder-Fahrradsitz. Idealerweise trägt das Kind zu seinem Schutz in dem Kinder-Fahrradsitz einen eigenen Fahrradhelm. Das Tragen des Fahrradhelms in dem Kinder-Fahrradsitz wird von dem Kind oftmals als unangenehm empfunden. Nicht immer ist außerdem eine ausreichende Sicherheit für das Kind in dem Kinder-Fahrradsitz gewährleistet.

Die DE 20 2010 012 408 U1 offenbart einen Sporthelm mit einer Dämpfungsvorrichtung an der Helmrückseite, insbesondere für den Biathlonsport. Bevorzugt ist auf einem Käfigelement der Dämpfungsvorrichtung ein Dämpfungselement angeordnet, das vorzugsweise aus Gummi oder geschäumtem Kunststoff besteht. Dieser Sporthelm ist vergleichsweise aufwändig im Aufbau.

Die DE 10 2012 108 069 A1 offenbart eine Kopfstütze eines Fahrradkindersitzes.

Aus der US 2017/0196290 A1 sind Stoßminderungseinrichtungen für den Kopfschutz bekannt. Mittels Klebstoff, doppelseitigem Klebeband, Klettband, Bändern und/oder Schrauben sind diese an einer Helmschale befestigt.

Aus der US 2019/0239591 A1 ist ein Clip zum Halten eines Brillenbands an einem Helm bekannt. Der Clip hat Federbeine und einen Anker zur Verbindung mit dem Helm.

Die US 6,314,586 B1 offenbart ein Zusatzschutzelement für Helme, das beispielsweise rückseitig an einem Helm angeordnet und lösbar befestigt ist. Das Zusatzschutzelement hat einen Grundabschnitt, von dem eine Vielzahl Vorsprünge vorspringen. Es ist beispielsweise durch bekannte Verbindungsmethoden örtlich festlegbar.

Aus der US 5,940,890 ist ein Helm mit einer Brillenband-Befestigungsvorrichtung bekannt, die einen hinten an einer Helmschale angeordneten Halteabschnitt und einen Clip hat. Zwischen dem Halteabschnitt und dem Clip ist ein Brillenband zum Halten desselben anordenbar. Der Halteabschnitt kann beispielsweise separat ausgeführt sein. Er kann eine gummiartige, klebrige oder haltende Außenfläche aufweisen. Der Clip hat einen Hauptkörper, der beispielsweise aus flexiblem Kunststoff besteht.

Aus der EP 1 674 384 A2 ist ein Kinder-Fahrradsitz bekannt. Der Fahrradsitz umfasst ein Rückenelement und ein Sitzflächenelement. Ein oberer Abschnitt des Rückenelements läuft nach schräg hinten oben und bildet eine Aufnahme für einen Helm zum Schutz eines Kinds. In dem oberen Abschnitt ist eine Durchgangsöffnung ausgebildet.

Der Erfindung liegt die Aufgabe zugrunde, einen Kinder-Fahrradhelm bereitzustellen, der zum einen dem Träger einen besonders hohen Tragekomfort und zum anderen eine äußerst hohe Sicherheit bietet. Eine entsprechende Zusatzanordnung für einen Kinder-Fahrradhelm und Anordnung mit einem Kinder-Fahrradhelm sollen ebenfalls geliefert werden.

Diese Aufgabe wird erfindungsgemäß durch die in den Hauptansprüchen 1, 14 und 15 angegebenen Merkmale gelöst. Der Kern der Erfindung liegt in einer Zusatzanordnung, die beim bestimmungsgemäßen Tragen des Helms durch den Träger, insbesondere durch ein Kind, zu einer Rückenlehne des Kindersitzes, in dem der Träger sitzt, benachbart angeordnet bzw. dieser zugewandt ist. Der mindestens eine Kindersitz-Anlagebereich der Zusatzanordnung ist prinzipiell imstande, bei einem bestimmungsgemäßen Tragen des Helms durch den Träger und bei einem Sitzen des Trägers im Kindersitz zumindest zeitweise und/oder bereichsweise an dem Kindersitz bzw. dessen Rückenlehne zur Anlage zu kommen. Er ist vorzugsweise mittig in Bezug auf eine Breitenrichtung des Helms angeordnet. Erfindungsgemäß wurde erkannt, dass eine solche Zusatzanordnung die Probleme des Stands der Technik überwindet und besonders vorteilhaft ist.

Die Ausgestaltung mit der mindestens einen Festlegeöffnung und dem mindestens einen Festlegekörper führt zu einer besonders einfach herstellbaren und funktionssicheren Festlegung der Zusatzanordnung an der Helmschale. Es ist zweckmäßig, wenn die mindestens eine Festlegeöffnung und der mindestens eine Festlegekörper zumindest bereichsweise komplementär zueinander ausgeführt sind und in an der Helmschale angeordnetem Zustand der Zusatzanordnung der mindestens eine Festlegekörper zumindest bereichsweise an einer die mindestens eine Festlegeöffnung begrenzenden Wandung/Flanke der Helmschale anliegt. Die mindestens eine Festlegeöffnung ist vorzugsweise rückseitig in der Helmschale angeordnet. Sie hat vorzugsweise einen viereckigen, wie trapezförmigen, Querschnitt. Es ist von Vorteil, wenn sich die mindestens eine Festlegeöffnung von außen nach innen in Bezug auf die Helmschale verjüngt. Sie erstreckt sich dann in der Helmschale von der Rückseite der Helmschale nach vorne.

Bevorzugt handelt es sich bei der mindestens einen Festlegeöffnung um eine in der Helmschale ohnehin bereits vorhandene, insbesondere herkömmliche, Öffnung, wie Belüftungsöffnung, Gewichtsreduktionsöffnung und/oder Öffnung für eine Zusatzkomponente, wie eine Leuchte, einen Reflektor oder dergleichen.

Es ist zweckmäßig, wenn die Zusatzanordnung zumindest bereichsweise gegenüber einem benachbarten äußeren Bereich der Helmschale zumindest rückseitig vorsteht. Der mindestens eine Kindersitz-Anlagebereich steht bevorzugt mindestens 1 mm, bevorzugt mindestens 3 mm, gegenüber einem benachbarten äußeren Bereich der Helmschale nach außen vor. Das Anlagematerial liegt vorzugsweise nach außen frei. Es ist von Vorteil, wenn der mindestens eine Kindersitz-Anlagebereich vollständig aus dem Anlagematerial gebildet ist.

Es ist von Vorteil, wenn bei einer Anlage der Zusatzanordnung an dem Kindersitz die Helmschale zumindest bereichsweise, bevorzugt vollständig, beabstandet zu dem Kindersitz ist/bleibt. Die, insbesondere gedämpfte, Anlage der Zusatzanordnung an dem Kindersitz über das nachgiebige Anlagematerial wird von dem Träger nicht als unangenehm empfunden. Beispielsweise sind so Unebenheiten in einem Fahrweg und/oder ein Zurücckippen des Kopfs des Trägers in Richtung auf die Rückenlehne des Trägers nicht länger störend.

Beispielsweise ist die Zusatzanordnung durch Spritzen hergestellt und somit eine Spritz-Zusatzanordnung. Sie ist bevorzugt nachrüstbar.

Es ist zweckmäßig, wenn die Helmschale einen Kopf-Aufnahmeraum räumlich begrenzt. Vorzugsweise hat die Helmschale einen vorderen Bereich, einen hinteren Bereich und einen Deckenbereich sowie einen diesem abgewandten unteren Rand. Beispielsweise ist die Helmschale mehrteilig. Sie umfasst dann vorzugsweise eine harte Außenschale und eine weiche stoßdämpfende Innenschale, beispielsweise aus EPS-Material. Die Außenschale ist günstigerweise dünner als die Innenschale. Alternativ ist die Helmschale beispielsweise einteilig.

Zum Beispiel ist die Zusatzanordnung einstückig ausgeführt. Vorzugsweise sind eine Trageinrichtung, der mindestens eine Festlegekörper, mindestens ein von dem mindestens einen Festlegekörper getragener Angreifvorsprung zum Angreifen an der Helmschale, mindestens ein Eingreifkörper zum Greifen in mindestens eine in der Helmschale ausgebildete Rückhalteöffnung und/oder mindestens ein Kindersitz-Anlagevorsprung der Zusatzanordnung einstückig/einteilig ausgeführt bzw. einstückig/einteilig miteinander verbunden. Die Zusatzanordnung ist also bevorzugt bereits ursprünglich ein einziges Teil und/oder durch einen einzigen Fertigungsschritt, wie Spritzen, wie Einkomponenten-Spritzen, hergestellt. Bevorzugt besteht die Zusatzanordnung aus einem einzigen Material, insbesondere nur aus dem Anlagematerial. Alternativ ist sie mehrteilig. Sie ist beispielsweise als Formkörper ausgebildet.

Die Zusatzanordnung und die Helmschale sind beispielsweise ursprünglich separat ausgebildet.

Es ist von Vorteil, wenn der Helm eine an der Helmschale angeordnete Riemenanordnung zum sicheren Halten des Helms an dem Kopf des Trägers beim Tragen des Helms umfasst.

Günstigerweise umfasst der Kindersitz ein Sitzteil und eine gegenüber dem Sitzteil aufragende Rückenlehne. Der Kindersitz weist vorzugsweise auch ein Gurtsystem zum Sichern des Trägers in dem Kindersitz auf. Es ist zweckmäßig, wenn der Kindersitz ein Grundgestell und vorzugsweise eine weiche Auskleidung hat.

Weitere vorteilhafte Ausgestaltungen der Erfindung sind in den Unteransprüchen angegeben.

Die Ausgestaltung gemäß Unteranspruch 2 führt zu einer reduzierten bzw. gedämpften Übertragung von Stößen/Schlägen von dem Kindersitz auf die Helmschale bzw. den Träger des Helms, die beispielsweise beim Fahren entlang eines Fahrwegs auftreten und bei Berührungen zwischen der Zusatzanordnung und dem Kindersitz auf den Helm wirken. Dies erhöht den Tragekomfort des Helms. Unangenehme mögliche Begleiterscheinungen beim Fahren in dem Kindersitz, wie Kopfschmerzen und/oder Nackenschmerzen des Trägers des Helms oder dergleichen, sind so häufig wirksam vermeidbar bzw. reduzierbar.

Die Ausgestaltung gemäß Unteranspruch 3 erhöht ebenfalls den Tragekomfort. Der Helm ist so gegenüber dem Kindersitz bei Anlage an diesem ein Stück weit fixiert. Beispielsweise ist so verhindert, dass der Helm bei Anlage an dem Kindersitz an dem Kindersitz gleitet. Eine vergleichsweise stabile Stellung des Helms gegenüber dem Kindersitz ist so gewährleistet. Vorzugsweise ist das Anlagematerial außenseitig zumindest bereichsweise rutschhemmend.

Die Ausgestaltung gemäß Unteranspruch 4 führt zu einer Erhöhung des Tragekomforts für den Träger des Helms. Sie bewirkt eine reduzierte bzw. gedämpfte Übertragung von Vibrationen von dem Kindersitz auf die Helmschale bzw. den Träger des Helms, die beispielsweise beim Fahren entlang eines Fahrwegs auftreten und bei Berührungen zwischen der Zusatzanordnung und dem Kindersitz auf den Helm wirken. Unangenehme Begleiterscheinungen beim Fahren in dem Kindersitz, wie Kopfschmerzen und/oder Nackenschmerzen des Trägers des Helms oder dergleichen, sind so wirksam vermeidbar bzw. reduzierbar.

Die Zusatzanordnung bildet so quasi eine Zusatzfunktionsanordnung.

Es ist zweckmäßig, wenn das nachgiebige Anlagematerial ein Kunststoffmaterial, insbesondere Elastomermaterial, wie thermoplastisches Elastomermaterial, wie TPU (thermoplatisches Polyurethan) oder Silikonmaterial, ist/umfasst. Beispielsweise ist der mindestens eine Kindersitz-Anlagebereich zumindest bereichsweise außenseitig aufgeraut.

Die lösbare Anordnung der Zusatzanordnung an der Helmschale gemäß Unteranspruch 5 erlaubt beispielsweise einen einfachen Austausch der Zusatzanordnung, zum Beispiel durch mindestens eine Leuchte/Lampe oder eine andere Zusatzanordnung, oder eine gründliche Reinigung derselben in entferntem Zustand.

Die Ausgestaltung gemäß Unteranspruch 7 erlaubt eine sichere örtliche Festlegung der Zusatzanordnung an der Helmschale. Insbesondere ist so die Zusatzanordnung gegenüber der Helmschale fixiert bzw. unbeweglich gehalten. Es ist zweckmäßig, wenn an der Helmschale und/oder Zusatzanordnung mindestens ein entsprechendes Festlegemittel angeordnet ist. Das Festlegemittel ist beispielsweise ein Festlegekörper, eine Festlegeöffnung oder dergleichen.

Der mindestens eine Angreifvorsprung gemäß dem Unteranspruch 8 ist vorzugsweise imstande, in der Helmschale an der Helmschale und/oder innenseitig an diese anzugreifen.

Auch die Ausgestaltung gemäß Unteranspruch 9 ist besonders montagefreundlich und funktionssicher. Vorzugsweise ist die mindestens eine Rückhalteöffnung schlitz- bzw. nutartig. Der mindestens eine Eingreifkörper ist günstigerweise, insbesondere endseitig, an mindestens einem Haltearm der Zusatzanordnung angeordnet und bevorzugt komplementär zu der mindestens einen Rückhalteöffnung. Er ist zum Beispiel stegartig ausgebildet.

Gemäß einer nicht-erfindungsgemäßen Ausgestaltung ist die Zusatzanordnung stoffschlüssig mit der Helmschale verbunden. Diese Ausgestaltung führt zu einer besonders sicheren Festlegung der Zusatzanordnung an der Helmschale. Beispielsweise ist die Zusatzanordnung mit der Helmschale verklebt, verschweißt oder dergleichen. Sie ist dann bevorzugt unlösbar oder nur mit Hilfsmitteln lösbar an der Helmschale angeordnet. Sowohl die lösbare als auch die unlösbare Anordnung der Zusatzanordnung haben ihre Vorteile. Es ist letztendlich Geschmackssache, welche Ausgestaltung persönlich bevorzugt wird.

Die Ausgestaltung gemäß dem Unteranspruch 11 ist zum einen optisch äußerst ansprechend. Die Zusatzanordnung ist in die Helmschale bevorzugt teilweise integriert. Zum anderen ist so günstigerweise eine Relativbewegung zwischen der Helmschale und der Zusatzanordnung unterbunden, insbesondere, wenn die mindestens eine Zusatzanordnungs-Aufnahmevertiefung und die Helmschale zumindest bereichsweise komplementär zueinander ausgeführt sind.

Der mindestens eine Kindersitz-Anlagevorsprung gemäß dem Unteranspruch 12 bietet dem Träger einen äußerst hohen Tragekomfort und steht bevorzugt gegenüber einem benachbarten Bereich der Helmschale nach hinten bzw. außen vor. Bevorzugt ist eine Vielzahl von Kindersitz-Anlagevorsprüngen vorhanden. Es ist zweckmäßig, wenn die Kindersitz-Anlagevorsprünge beabstandet zueinander angeordnet sind. Sie sind beispielsweise in Zeilen und/oder Spalten regelmäßig angeordnet. Alternativ sind diese unregelmäßig angeordnet. Zum Beispiel unterscheiden sich die Kindersitz-Anlagevorsprünge in ihrer Abmessung und/oder Gestalt. Jeder Kindersitz-Anlagevorsprung ist bevorzugt aus dem Anlagematerial gebildet.

Beispielsweise ist jeder Kindersitz-Anlagevorsprung eckig, wie viereckig, wie rechteckig, rautenförmig, trapezförmig, pyramidenförmig, dreieckförmig, beispielsweise mit nach innen gekrümmten Seitenflächen, kreisförmig, ringförmig, lamellenförmig, bogenförmig oder dergleichen.

Die mindestens eine Stoß-/Vibrations-Dämpfungskammer gemäß dem Unteranspruch 13 erlaubt wieder eine besonders hohe Stoß- und/oder Vibrationsdämpfung. Jede Stoß-/Vibrations-Dämpfungskammer ist beispielsweise imstande, Stöße und/oder Vibrationen von dem Kindersitz auf die Helmschale bei Anlage des Helms an dem Kindersitz zumindest zu reduzieren. Jede Stoß-/Vibrations-Dämpfungskammer ist beispielsweise räumlich abgeschlossen und mit Gas, wie Luft, gefüllt. Alternativ ist sie, insbesondere nach innen, zumindest bereichsweise offen.

Es ist zweckmäßig, wenn jeder Kindersitz-Anlagevorsprung mindestens eine Stoß-/Vibrations-Dämpfungskammer zumindest bereichsweise ausbildet bzw. begrenzt. Er ist beispielsweise dom- oder kuppelartig.

Es ist von Vorteil, wenn sich die Zusatzanordnung rückseitig bis zu einem unteren freien Rand der Helmschale erstreckt. Gemäß einer alternativen Ausführungsform endet die Zusatzanordnung beabstandet zu dem unteren freien Rand der Helmschale.

Nachfolgend werden unter Bezugnahme auf die beigefügte Zeichnung bevorzugte Ausführungsformen der Erfindung beispielhaft beschrieben. Dabei zeigen:
- Fig. 1: eine perspektivische Ansicht einer erfindungsgemäßen Anordnung von schräg hinten,

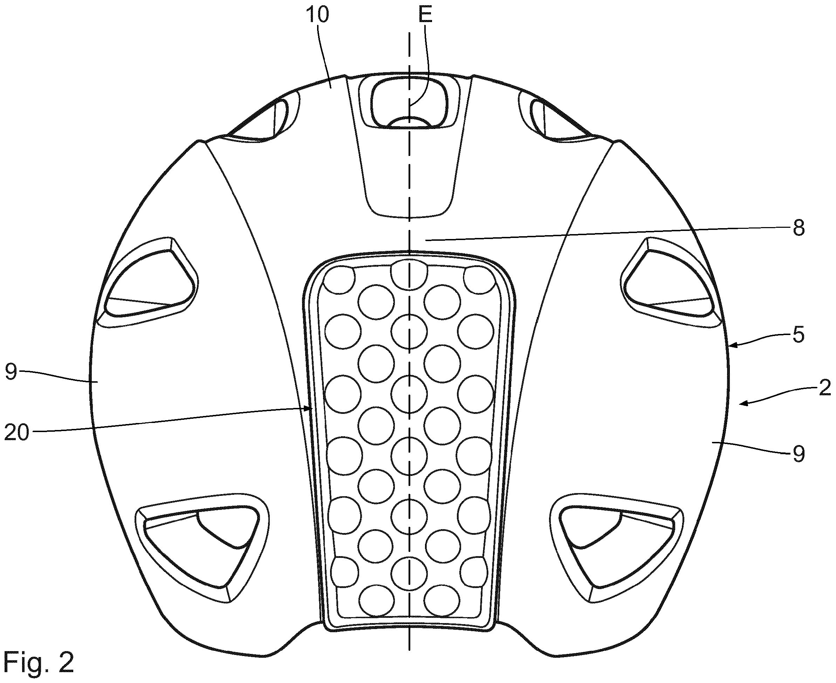

- Fig. 2: eine rückseitige Ansicht eines erfindungsgemäßen Helms der in Fig. 1 gezeigten Anordnung,

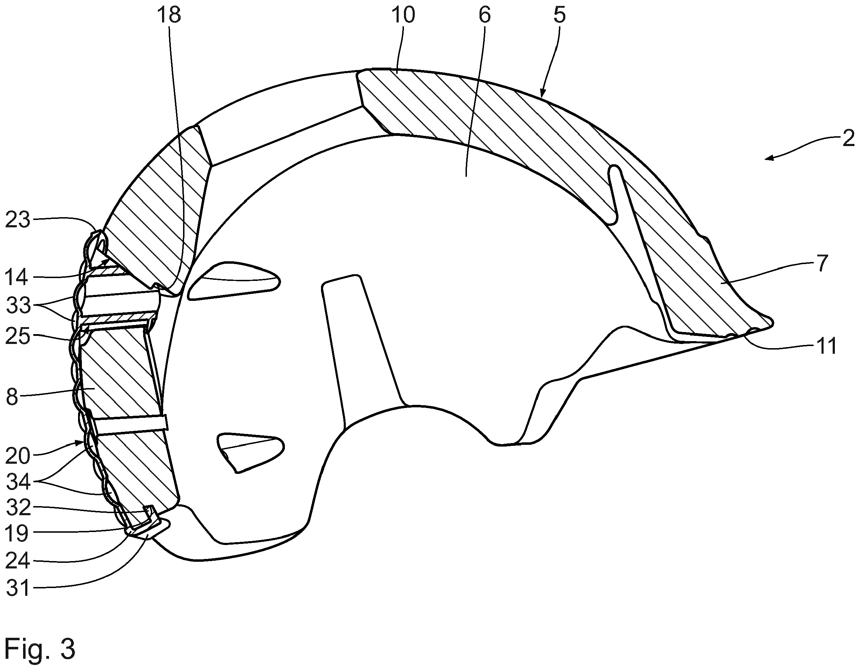

- Fig. 3: einen Längsschnitt durch den in Fig. 2 veranschaulichten Helm,

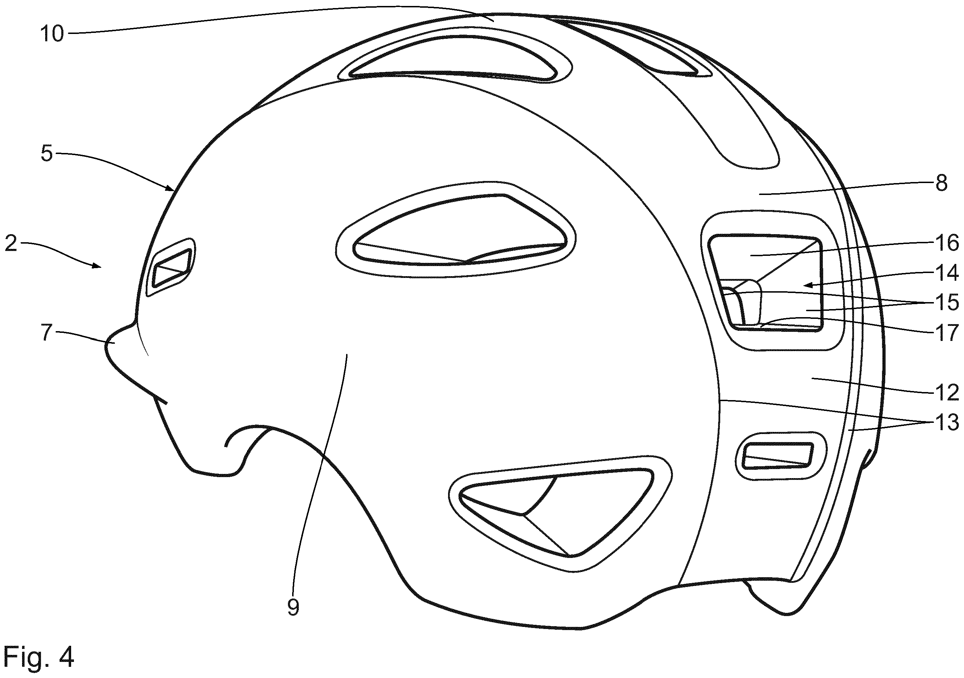

- Fig. 4: eine perspektivische Ansicht einer Helmschale des in Fig. 1, 2, 3 dargestellten Helms von schräg hinten,

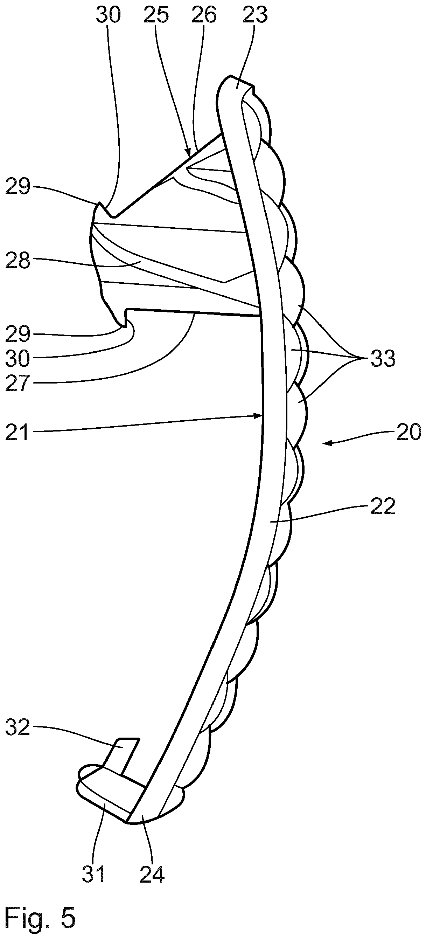

- Fig. 5: eine Seitenansicht einer erfindungsgemäßen Zusatzanordnung des in Fig. 2, 3 gezeigten Helms,

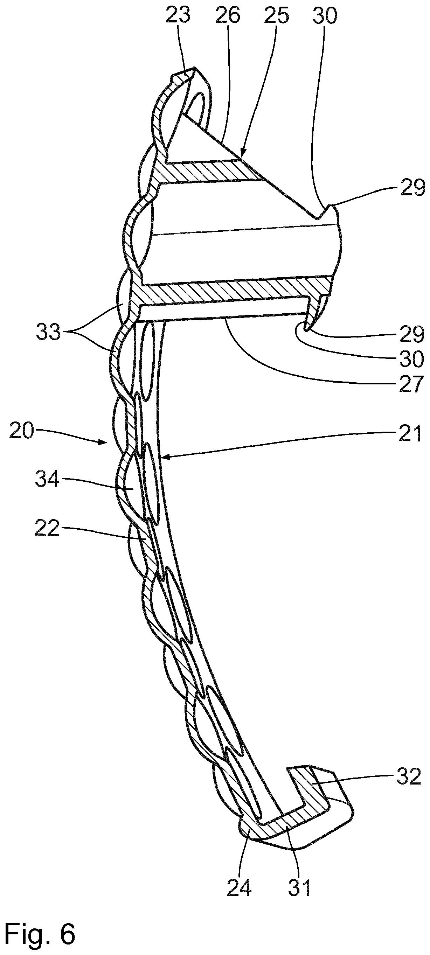

- Fig. 6: einen Längsschnitt durch die in Fig. 5 gezeigte Zusatzanordnung, und
- Fig. 7: eine rückseitige Ansicht eines erfindungsgemäßen Helms gemäß einer alternativen Ausführungsform

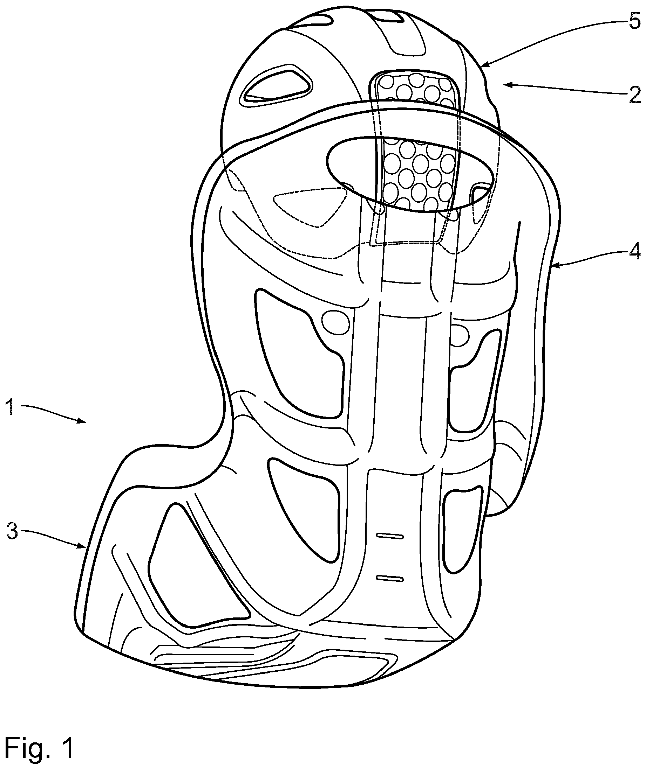

Eine in Fig. 1 in ihrer Gesamtheit gezeigte Anordnung weist einen Fahrrad-Kindersitz 1 für ein Kind (nicht dargestellt) und einen Helm 2 für das Kind auf.

Der Fahrrad-Kindersitz 1 umfasst ein Sitzteil 3 mit einer Sitzfläche für das Kind und eine von dem Sitzteil 3 nach oben ragende Rückenlehne 4. Er ist vorzugsweise bezüglich einer Symmetrieebene symmetrisch.

Der Fahrrad-Kindersitz 1 ist an einem Fahrrad (nicht dargestellt), beispielsweise an dessen Sattelrohr, Rahmen, Lenkrad und/oder Gepäckträger, befestigt. Er ist vor oder hinter einem Fahrer des Fahrrads angeordnet.

Der als Fahrradhelm ausgeführte Helm 2 hat eine Helmschale bzw. Helmkalotte 5, die starr und vorzugsweise aus einem Kunststoffmaterial gebildet ist. Er ist bezüglich einer Mittelebene E symmetrisch.

Die Helmschale 5 begrenzt räumlich einen Kopf-Aufnahmeraum 6. Sie weist auf einen vorderen Bereich 7, einen dem vorderen Bereich 7 gegenüberliegenden hinteren Bereich 8 und zwei einander gegenüberliegende Seitenbereiche 9, die im Wesentlichen zwischen dem vorderen Bereich 7 und dem hinteren Bereich 8 verlaufen. Ferner hat die Helmschale 5 einen oberen Deckenbereich 10. Gegenüberliegend zu dem Deckenbereich 10 weist die Helmschale 5 einen unteren freien Abschlussrand 11 auf, der umlaufend ist. Die Mittelebene E erstreckt sich längs zwischen dem vorderen Bereich 7 und dem hinteren Bereich 8.

Wenn der Helm 2 bestimmungsgemäß von dem Kind getragen wird, befindet sich der vordere Bereich 7 über bzw. benachbart zu dessen Stirn, während der hintere Bereich 8 dessen Hinterkopf zumindest größtenteils bedeckt. Die Seitenbereiche 9 sind seitlich zu dem Kopf des Kinds angeordnet. Der Deckenbereich 10 bedeckt oben den Kopf des Kinds, während der Abschlussrand 11 um den Kopf des Kinds läuft und zumindest größtenteils nach unten gewandt ist. Der vordere Bereich 7 der Helmschale 5 ist somit ein Stirnbereich, während der hintere Bereich 8 ein Hinterkopfbereich ist. Der hintere Bereich 8 ist der Rückenlehne 4 des Kinder-Fahrradsitzes 1 zugewandt, wenn das Kind mit dem Helm 2 in dem Kinder-Fahrradsitz 1 ordnungsgemäß sitzt.

In dem hinteren Bereich 8 der Helmschale 5 ist eine flächige Aufnahmevertiefung 12 ausgebildet, deren Boden beabstandet zu dem Kopf-Aufnahmeraum 6 verläuft. Die Aufnahmevertiefung 12 ist beispielsweise nach unten zu dem Abschlussrand 11 und gegenüberliegend zu diesem unbegrenzt. Sie ist seitlich durch einander zugewandte Flanken 13 der Helmschale 5 begrenzt. Die Flanken 13 sind der Mittelebene E zugewandt. Die Aufnahmevertiefung 12 kann sich auch in den Deckenbereich 10 und/oder die Seitenbereiche 9 bereichsweise erstrecken. Im Bereich der Aufnahmevertiefung 12 hat die Helmschale 5 zumindest bereichsweise eine reduzierte Dicke.

In dem hinteren Bereich 8 der Helmschale 5 ist außerdem eine Festlegeöffnung 14 ausgebildet, die von der Aufnahmevertiefung 12 ausgeht und in den Kopf-Aufnahmeraum 6 ausmündet. Die Festlegeöffnung 14 ist im Querschnitt viereckförmig. Sie ist durch zwei einander gegenüberliegende Seitenflanken 15 der Helmschale 5 und eine zwischen diesen verlaufende obere Flanke 16 der Helmschale 5 sowie eine zwischen diesen verlaufende untere Flanke 17 der Helmschale 5 begrenzt, die gegenüberliegend zu der oberen Flanke 16 angeordnet ist. Die obere Flanke 16 ist dem benachbarten Abschlussrand 11 zugewandt. Die obere Flanke 16 und die untere Flanke 17 näheren sich von der Aufnahmevertiefung 12 ausgehend einander an. Die obere Flanke 16 ist dabei abfallend und läuft von der Aufnahmevertiefung 12 aus nach schräg unten vorne. Sie springt benachbart zu dem Kopf-Aufnahmeraum 6 unter Bildung einer dem Kopf-Aufnahmeraum 6 zugewandten Rückhalteflanke 18 in Richtung auf den Deckenbereich 10 zurück.

Unterhalb der Festlegeöffnung 14 ist in der Helmschale 5 eine Rückhalteöffnung 19 ausgebildet. Die Rückhalteöffnung 19 ist in dem hinteren Bereich 8 der Helmschale 5 in dem Abschlussrand 11 benachbart zu der Aufnahmevertiefung 12 angeordnet. Sie ist in Umlaufrichtung des Abschlussrands 11 räumlich begrenzt. Ferner ist sie in einer Dickenrichtung der Helmschale 5 nach innen und außen begrenzt. Sie ist so beabstandet zu dem Kopf-Aufnahmeraum 6 und einer Außenfläche der Helmschale 5 angeordnet. Sie ist schlitz- bzw. nutartig.

Die Helmschale 5 trägt in zusammengesetztem Zustand des Helms 2 rückseitig eine Zusatzanordnung 20. Die Zusatzanordnung 20 weist eine Trageinrichtung 21 auf, die als Flächentrageinrichtung ausgeführt ist. Die Trageinrichtung 21 hat zwei einander gegenüberliegende Seitenränder 22 und einen zwischen diesen verlaufenden oberen Rand 23 sowie einen zwischen diesen verlaufenden unteren Rand 24. Die Trageinrichtung 21 ist an die Aufnahmevertiefung 12, insbesondere in Bezug auf Krümmung und Breite, angepasst. Sie ist in der Aufnahmevertiefung 12 aufgenommen und befindet sich so zumindest teilweise in der Helmschale 5. In montiertem Zustand der Zusatzanordnung 20 verlaufen die Seitenränder 22 der Zusatzanordnung 20 benachbart zu den Flanken 13 der Helmschale 5 bzw. liegen die Seitenränder 22 an diesen zumindest bereichsweise an. Der untere Rand 24 der Zusatzanordnung 20 erstreckt sich dort benachbart zu dem Abschlussrand 11 der Helmschale 5. Der obere Rand 23 der Zusatzanordnung 20 verläuft oberhalb der oberen Flanke 16. Die Trageinrichtung 21 bedeckt außenseitig die Helmschale 5 im Bereich der Aufnahmevertiefung 12.

Die Zusatzanordnung 20 weist einen Festlegevorsprung 25 auf, der von der Trageinrichtung 21 rückseitig vorspringt und benachbart zu dem oberen Rand 23 der Trageinrichtung 21 angeordnet ist. Der Festlegevorsprung 25 verjüngt sich von der Trageinrichtung 21 aus. Er hat eine obere Wandung 26, eine der oberen Wandung 26 gegenüberliegende untere Wandung 27 und zwei Seitenwandungen 28, die zwischen der oberen Wandung 26 und der unteren Wandung 27 verlaufen. Die obere Wandung 26 und die untere Wandung 27 laufen von der Trageinreichung 21 aus zusammen. Die obere Wandung 26 ist stark abfallend, während die untere Wandung 27 im Wesentlichen senkrecht zu der Trageinrichtung 21 bei deren Anschlussbereich an diese verläuft.

Der Festlegevorsprung 25 trägt kopfseitig bzw. an seinem freien Ende zwei Angreifvorsprünge 29, die von der oberen Wandung 26 und der unteren Wandung 27 der Festlegevorsprung 25 aus voneinander unter Bildung von der Trageinrichtung 21 zugewandten Angreifflanken 30 seitlich wegspringen. Die Angreifvorsprünge 29 springen nach oben und unten vor.

Die Zusatzanordnung 20 umfasst außerdem einen Tragarm 31, der benachbart zu dem unteren Rand 24 angeordnet und von dort im Wesentlichen rechtwinklig zu der Trageinrichtung 21 verläuft. Der Tragarm 31 ist rückseitig an der Trageinrichtung 21 angeordnet und trägt endseitig einen Eingreifsteg 32, der von dem Tragarm 31 aus nach oben vorspringt.

Die Trageinrichtung 21 trägt außerdem eine Vielzahl von Kindersitz-Anlagevorsprüngen 33, die von der gesamten Trageinrichtung 21 aus nach außen vorspringen und Stoß-/Vibrations-Dämpfungskammern 34 begrenzen bzw. ausbilden. Jeder Kindersitz-Anlagevorsprung 33 ist dom- bzw. kuppelartig ausgeführt und steht in montiertem Zustand der Zusatzanordnung 20 gegenüber einem benachbarten Bereich der Helmschale 5 rückseitig vor. Er steht auch gegenüber der Aufnahmevertiefung 12 nach außen vor.

Die gesamte Zusatzanordnung 20 ist beispielsweise aus dem Anlagematerial gebildet. Alternativ sind nur die Kindersitz-Anlagevorsprüngen 33 aus dem Anlagematerial gebildet. Die Trageinrichtung 20 und der Festlegevorsprung 25 sowie der Tragarm 31 samt Eingreifsteg 32 sind dann vorzugsweise aus einem anderen Material, insbesondere Kunststoffmaterial, gebildet.

In montiertem Zustand der Zusatzanordnung 20 greift der Festlegevorsprung 25 von außen in die Festlegeöffnung 14 ein. Die obere Wandung 26 des Festlegevorsprungs 25 ist dabei der oberen Flanke 16 der Helmschale 5 zugewandt bzw. liegt sie zumindest bereichsweise an dieser an. Die untere Wandung 27 des Festlegevorsprungs 25 ist der unteren Flanke 17 der Helmschale 5 zugewandt bzw. liegt sie bereichsweise an dieser an. Die Seitenwandungen 28 des Festlegevorsprungs 25 sind den Seitenflanken 15 der Helmschale 5 zugewandt bzw. liegen sie an diesen zumindest bereichsweise an. Der obere Angreifvorsprung 29 liegt an der Rückhalteflanke 18 an, während der untere Angreifvorsprung 29 innenseitig an der Helmschale 5 anliegt.

Der Tragarm 31 untergreift den Abschlussrand 11 und liegt an diesem zumindest bereichsweise an. Der Eingreifsteg 32 greift von unten in die Rückhalteöffnung 19 ein. Die Zusatzanordnung 20 ist so nach oben und unten und seitlich gegenüber der Helmschale 5 örtlich festgelegt.

Zur Anordnung der Zusatzanordnung 20 an der Helmschale 5 wird der Eingreifsteg 32 von unten in die Rückhalteöffnung 19 eingeführt. Der Festlegevorsprung 25 wird dann in die Festlegeöffnung 14 von außen nach innen eingeführt. Sobald die Angreifvorsprünge 29 ihre Endposition erreicht haben, erfolgt quasi eine Verrastung mit der Helmschale 5.

Beim Transportieren des den Helm 2 tragenden Kindes in dem Fahrrad-Kindersitz 1 entlang eines Fahrwegs kommt der Helm 2 mit den Kindersitz-Anlagevorsprüngen 33 der Zusatzanordnung 20 mit einem oberen Endbereich der Rückenlehne 4 immer wieder in Kontakt, was auf den Fahrweg und/oder das Verhalten des Kinds zurückzuführen ist. Aufgrund der Ausgestaltung und Anordnung der Kindersitz-Anlagevorsprünge 33 und des diese bildenden Anlagematerials werden, insbesondere harte, Stöße und/oder Vibrationen von dem Fahrrad-Kindersitz 1, die beim Fahren mit dem Fahrrad auftreten, gedämpft bzw. geschwächt auf die Helmschale 5 bzw. das Kind übertragen.

Die hier verwendeten Ausdrücke "oben", "unten", "vorne", "hinten", "rückseitig", "außen", "innen" oder dergleichen beziehen sich insbesondere auf das bestimmungsgemäße Tragen des Helms durch einen Träger.

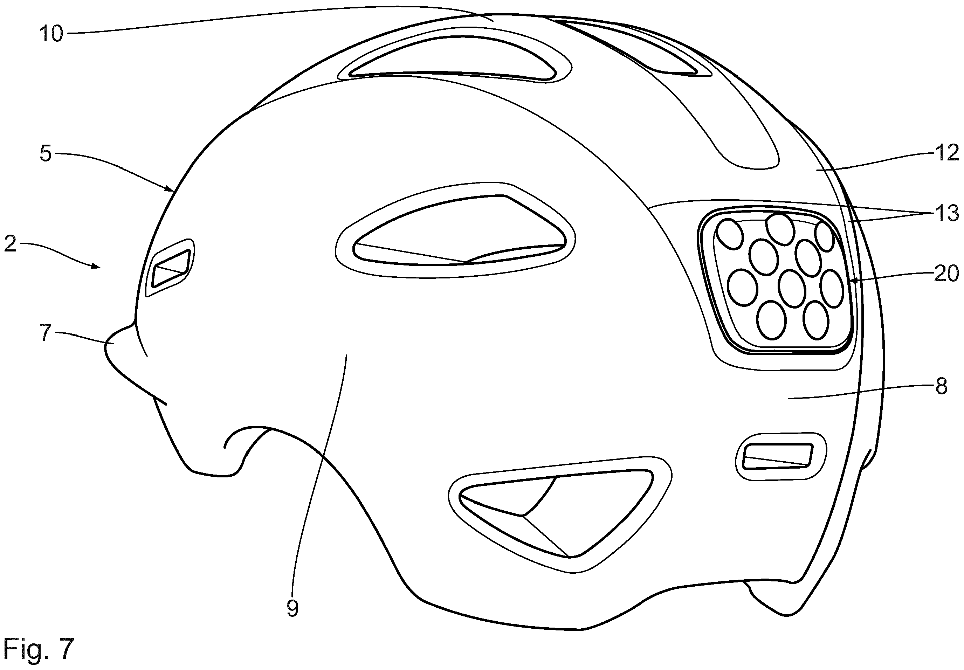

Nachfolgend wird unter Bezugnahme auf Fig. 7 eine weitere Ausführungsform beschrieben. Im Vergleich mit der vorherigen Ausführungsform, auf deren Beschreibung hiermit explizit verwiesen wird, ist die Zusatzanordnung 20 kleiner, insbesondere kürzer, ausgeführt. Sie endet beabstandet zu dem Abschlussrand 11.

Gemäß einer alternativen, nicht-dargestellten, nicht-erfindungsgemäßen Ausführungsform ist die Zusatzanordnung 20 mit der Helmschale 5 verklebt. Die Helmschale 5 ist dann ohne Festlegeöffnung 14 und Rückhalteöffnung 19 ausgeführt. Die Zusatzanordnung 20 ist ohne Festlegekörper 25 und Eingreifsteg 32 ausgebildet.

## Patentansprüche

1. Kinder-Fahrradhelm, umfassend
a) eine Helmschale (5) zum Schutz des Kopfes eines Trägers,
i. wobei in der Helmschale (5) mindestens eine Festlegeöffnung (14) ausgebildet ist, und **gekennzeichnet durch**
b) eine Zusatzanordnung (20), die
i. an der Helmschale (5) angeordnet ist,
ii. unter Bildung mindestens eines Kindersitz-Anlagebereichs zumindest rückseitig frei liegt, wobei zumindest der mindestens eine Kindersitz-Anlagebereich zumindest bereichsweise aus einem nachgiebigen Anlagematerial gebildet ist, und
iii. in an der Helmschale (5) angeordnetem Zustand mindestens einen in die mindestens eine Festlegeöffnung (14) eingeführten Festlegekörper (25) aufweist.

2. Kinder-Fahrradhelm nach Anspruch 1, **dadurch gekennzeichnet, dass** die Zusatzanordnung (20) zumindest in dem mindestens einen Kindersitz-Anlagebereich und/oder benachbart zu diesem zumindest bereichsweise stoßdämpfend ausgeführt ist.

3. Kinder-Fahrradhelm nach Anspruch 1 oder 2, **dadurch gekennzeichnet, dass** das Anlagematerial zumindest bereichsweise rutschhemmend ist.

4. Kinder-Fahrradhelm nach einem der vorherigen Ansprüche, **dadurch gekennzeichnet, dass** die Zusatzanordnung (20) zumindest in dem mindestens einen Kindersitz-Anlagebereich und/oder benachbart zu diesem zumindest bereichsweise vibrationsreduzierend ausgeführt ist.

5. Kinder-Fahrradhelm nach einem der vorherigen Ansprüche, **dadurch gekennzeichnet, dass** die Zusatzanordnung (20) an der Helmschale (5), insbesondere werkzeuglos, lösbar anordenbar ist.

6. Kinder-Fahrradhelm nach einem der vorherigen Ansprüche, **dadurch gekennzeichnet, dass** die Zusatzanordnung (20) von der Helmschale (5), insbesondere werkzeuglos, entfernbar ist.

7. Kinder-Fahrradhelm nach einem der vorherigen Ansprüche, **gekennzeichnet durch** eine Festlegeeinrichtung, insbesondere Rast- und/oder Steckeinrichtung, zum örtlichen Festlegen der Zusatzanordnung (20) an der Helmschale (5).

8. Kinder-Fahrradhelm nach einem der vorherigen Ansprüche, **dadurch gekennzeichnet, dass** die mindestens eine Festlegeöffnung (14) in einer Dickenrichtung der Helmschale (5) verläuft und insbesondere durchgängig ist, wobei der mindestens eine Festlegekörper (25) vorzugsweise mindestens einen, insbesondere kopfseitigen, Angreifvorsprung (29) trägt, der an der Helmschale (5) angreift.

9. Kinder-Fahrradhelm nach einem der vorherigen Ansprüche, **dadurch gekennzeichnet, dass** in der Helmschale (5) mindestens eine, insbesondere nach unten offene, Rückhalteöffnung (19) ausgebildet ist und die Zusatzanordnung (20) in an der Helmschale (5) angeordnetem Zustand mindestens einen in die mindestens eine Rückhalteöffnung (19) eingeführten Eingreifkörper (32) ausweist.

10. Kinder-Fahrradhelm nach Anspruch 9, **dadurch gekennzeichnet, dass** sich die mindestens eine Rückhalteöffnung (19) in der Helmschale (5) in einer Höhenrichtung der Helmschale (5) erstreckt.

11. Kinder-Fahrradhelm nach einem der vorherigen Ansprüche, **dadurch gekennzeichnet, dass** in der Helmschale (5) mindestens eine Zusatzanordnungs-Aufnahmevertiefung (12) ausgebildet ist, die die Zusatzanordnung (20) zumindest bereichsweise aufnimmt.

12. Kinder-Fahrradhelm nach einem der vorherigen Ansprüche, **dadurch gekennzeichnet, dass** die Zusatzanordnung (20) in dem mindestens einen Kindersitz-Anlagebereich außenseitig mindestens einen gegenüber der Helmschale (5) vorstehenden Kindersitz-Anlagevorsprung (33), vorzugsweise eine Vielzahl von Kindersitz-Anlagevorsprüngen (33), aufweist.

13. Kinder-Fahrradhelm nach einem der vorherigen Ansprüche, **dadurch gekennzeichnet, dass** die Zusatzanordnung (20) mindestens eine Stoß-/Vibrations-Dämpfungskammer (34), vorzugsweise eine Vielzahl von Stoß-/Vibrations-Dämpfungskammern (34), aufweist.

14. Zusatzanordnung für einen Kinder-Fahrradhelm, insbesondere nach einem der vorherigen Ansprüche, umfassend
a) mindestens einen Kindersitz-Anlagebereich, wobei zumindest der mindestens eine Kindersitz-Anlagebereich zumindest bereichsweise aus einem nachgiebigen Material gebildet ist, und
b) mindestens einen Festlegekörper (25) zum Einführen in mindestens eine in einer Helmschale (5) des Kinder-Fahrradhelms ausgebildete Festlegeöffnung (14).

15. Anordnung, umfassend
a) einen Kinder-Fahrradhelm (2) nach einem der Ansprüche 1 bis 13, und
b) einen Kindersitz (1).

## Claims

1. Children's bicycle helmet, comprising
a) a helmet shell (5) for protecting the head of a wearer,
i. wherein at least one fixing opening (14) is formed in the helmet shell (5), and **characterized by**
b) an auxiliary assembly (20), which
i. is arranged at the helmet shell (5),
ii. is exposed at least on the rear side to form at least one child seat contact region, wherein at least the at least one child seat contact region is formed, at least in some regions, from a resilient contact material, and
iii. in the state in which it is arranged at the helmet shell (5), has at least one fixing body (25) inserted into the at least one fixing opening (14).

2. Children's bicycle helmet according to claim 1, **characterized in that** the auxiliary assembly (20) is designed to be shock-absorbing, at least in some regions, at least in the at least one child seat contact region and/or adjacent thereto.

3. Children's bicycle helmet according to claim 1 or 2, **characterized in that** the contact material is slip-resistant at least in some regions.

4. Children's bicycle helmet according to any one of the preceding claims, **characterized in that** the auxiliary assembly (20) is designed to reduce vibrations, at least in some regions, at least in the at least one child seat contact region and/or adjacent thereto.

5. Children's bicycle helmet according to any one of the preceding claims, **characterized in that** the auxiliary assembly (20) can be arranged at the helmet shell (5) as to be detachable, in particular without tools.

6. Children's bicycle helmet according to any one of the preceding claims, **characterized in that** the auxiliary assembly (20) is removable from the helmet shell (5), in particular without tools.

7. Children's bicycle helmet according to any one of the preceding claims, **characterized by a** fixing device, in particular a latching and/or plug-in device, for local fixing of the auxiliary assembly (20) to the helmet shell (5).

8. Children's bicycle helmet according to any one of the preceding claims, **characterized in that** the at least one fixing opening (14) extends in a thickness direction of the helmet shell (5) and is in particular continuous, wherein the at least one fixing body (25) preferably carries at least one, in particular head-side, engagement projection (29) which engages on the helmet shell (5).

9. Children's bicycle helmet according to any one of the preceding claims, **characterized in that** at least one retention opening (19), in particular open at the bottom, is formed in the helmet shell (5), and the auxiliary assembly (20), when arranged at the helmet shell (5), has at least one engagement body (32) inserted into the at least one retention opening (19).

10. Children's bicycle helmet according to claim 9, **characterized in that** said at least one retention opening (19) in said helmet shell (5) extends in a height direction of said helmet shell (5).

11. Children's bicycle helmet according to any one of the preceding claims, **characterized in that** at least one auxiliary assembly receiving recess (12) is formed in the helmet shell (5), which recess receives the auxiliary assembly (20) at least in some regions.

12. Children's bicycle helmet according to any one of the preceding claims, **characterized in that** the auxiliary assembly (20), in the at least one child seat contact region, on the outside has at least one child seat contact projection (33), preferably a plurality of child seat contact projections (33), projecting relative to the helmet shell (5).

13. Children's bicycle helmet according to any one of the preceding claims, **characterized in that** the auxiliary assembly (20) has at least one shock/vibration damping chamber (34), preferably a plurality of shock/vibration damping chambers (34).

14. Auxiliary assembly for a children's bicycle helmet, in particular according to any one of the preceding claims, comprising
a) at least one child seat contact region, wherein at least the at least one child seat contact region is formed, at least in some regions, from a resilient material, and
b) at least one fixing body (25) for the insertion into at least one fixing opening (14) formed in a helmet shell (5) of the children's bicycle helmet.

15. Assembly comprising
a) a children's bicycle helmet (2) according to any one of claims 1 to 13, and
b) a child seat (1).

## Revendications

1. Casque de vélo pour enfants, comprenant
a) une coque de casque (5) pour protéger la tête d'un porteur,
i. au moins une ouverture de fixation (14) étant formée dans la coque de casque (5), et **caractérisé par**
b) un agencement supplémentaire (20) qui
i. est disposée sur la coque du casque (5),
ii. est exposé au moins à l'arrière en formant au moins une zone d'appui de siège d'enfant, au moins ladite au moins une zone d'appui de siège d'enfant étant formée au moins par endroits d'un matériau d'appui souple, et
iii. dans l'état disposé sur la coque de casque (5), présente au moins un corps de fixation (25) introduit dans ladite au moins une ouverture de fixation (14).

2. Casque de vélo pour enfants selon la revendication 1, **caractérisé en ce que** ledit agencement supplémentaire (20) est réalisé de manière à amortir les chocs, au moins par endroits, au moins dans ladite au moins une zone d'appui de siège d'enfant et/ou au voisinage de celle-ci.

3. Casque de vélo pour enfants selon la revendication 1 ou 2, **caractérisé en ce que** le matériau d'appui est antidérapant au moins par endroits.

4. Casque de vélo pour enfants selon l'une quelconque des revendications précédentes, **caractérisé en ce que** ledit agencement supplémentaire (20) est réalisé de manière à réduire les vibrations, au moins par endroits, au moins dans ladite au moins une zone d'appui de siège d'enfant et/ou au voisinage de celle-ci.

5. Casque de vélo pour enfants selon l'une quelconque des revendications précédentes, **caractérisé en ce que** ledit agencement supplémentaire (20) peut être disposé de manière amovible, en particulier sans outil, sur la coque de casque (5).

6. Casque de vélo pour enfants selon l'une quelconque des revendications précédentes, **caractérisé en ce que** ledit agencement supplémentaire (20) peut être retiré de la coque de casque (5), en particulier sans outil.

7. Casque de vélo pour enfants selon l'une quelconque des revendications précédentes, **caractérisé par** un dispositif de fixation, en particulier un dispositif d'encliquetage et/ou d'enfichage, pour fixer localement ledit agencement supplémentaire (20) sur la coque de casque (5).

8. Casque de vélo pour enfants selon l'une quelconque des revendications précédentes, **caractérisé en ce que** ladite au moins une ouverture de fixation (14) s'étend dans une direction d'épaisseur de la coque de casque (5) et est en particulier continue, ledit au moins un corps de fixation (25) portant de préférence au moins une saillie d'engrènement (29), en particulier du côté tête, qui s'engrène sur la coque de casque (5).

9. Casque de vélo pour enfants selon l'une quelconque des revendications précédentes, **caractérisé en ce qu'**au moins une ouverture de retenue (19), en particulier ouverte vers le bas, est formée dans la coque de casque (5) et **en ce que** ledit agencement supplémentaire (20), dans l'état disposé sur la coque de casque (5), présente au moins un corps d'engrènement (32) introduit dans ladite au moins une ouverture de retenue (19).

10. Casque de vélo pour enfants selon la revendication 9, **caractérisé en ce que** ladite au moins une ouverture de retenue (19) dans la coque de casque (5) s'étend dans une direction d'hauteur de la coque de casque (5).

11. Casque de vélo pour enfants selon l'une quelconque des revendications précédentes, **caractérisé en ce qu'**au moins un évidement de réception de l'agencement supplémentaire (12) est formé dans la coque de casque (5), ledit évidement de réception recevant l'agencement supplémentaire (20) au moins par endroits.

12. Casque de vélo pour enfants selon l'une quelconque des revendications précédentes, **caractérisé en ce que** ledit agencement supplémentaire (20), dans ladite au moins une zone d'appui de siège d'enfant, côté extérieur, présente au moins une saillie d'appui de siège d'enfant (33) faisant saillie par rapport à la coque de casque (5), de préférence une pluralité de saillies d'appui de siège d'enfant (33).

13. Casque de vélo pour enfants selon l'une quelconque des revendications précédentes, **caractérisé en ce que** ledit agencement supplémentaire (20) présente au moins une chambre d'amortissement des chocs/vibrations (34), de préférence une pluralité de chambres d'amortissement des chocs/vibrations (34).

14. Agencement supplémentaire pour casque de vélo pour enfants, en particulier selon l'une quelconque des revendications précédentes, comprenant
a) au moins une zone d'appui de siège d'enfant, au moins ladite au moins une zone d'appui de siège d'enfant étant formée au moins par endroits d'un matériau souple, et
b) au moins un corps de fixation (25) destiné à être introduit dans au moins une ouverture de fixation (14) formée dans une coque de casque (5) du casque de vélo pour enfants.

15. Agencement comprenant
a) un casque de vélo pour enfants (2) selon l'une quelconque des revendications 1 à 13, et
b) un siège d'enfant (1).
